# EUROPEAN PATENT SPECIFICATION

(11) **EP 3 053 155 B1**
(45) Date of publication and mention of the grant of the patent: **27.06.2018**
(21) Application number: 14781161.6
(22) Date of filing: 02.10.2014
(51) Int. Cl.: G08G 1/056, G08G 1/04, G06K 9/00, H04N 13/00

(54) **SYSTEM FOR TRAFFIC BEHAVIOUR SURVEILLANCE**
SYSTEM ZUR VERKEHRSVERHALTENSÜBERWACHUNG
SYSTÈME DE SURVEILLANCE DU COMPORTEMENT DE TRAFIC

(30) Priority: 03.10.2013 EP 13187274
(43) Date of publication of application: 10.08.2016
(73) Proprietor: Kapsch TrafficCom AB, 551 10 Jönköping (SE)
(72) Inventor: CRONA, Björn, S-553 33 Jönköping (SE)
(74) Representative: Zacco Sweden AB
(86) International application number: PCT/EP2014/071198
(87) International publication number: WO 2015/049352

(56) References cited:
- EP-A1- 2 602 640
- DE-A1- 4 300 651
- DE-A1- 19 640 938
- DE-A1-102008 035 992

## Description

### TECHNICAL FIELD

The present invention relates to a method for traffic behaviour surveillance for gathering statistics or identifying traffic rule violations.

### BACKGROUND ART

Improving safety on roads is an important and critical task necessary to ensure a functioning road network. This can be achieved through a variety of means ranging from simple ones such as enacting traffic laws that govern the behaviour of vehicles on the road, setting speed limits, building obstacles such as speed bumps.

One especially dangerous manoeuvre drivers regularly perform while driving is the overtaking of other vehicles, this can often require the driver to be capable of judging distances and speed to several other moving objects, such as the vehicle or vehicles being overtaken, vehicles behind the driver, and vehicles travelling in the opposite direction, as the driver may have to travel in the same lane as oncoming traffic to complete the overtaking.

On some stretches of road, overtaking can be made safer by installing dividers, making the driver unable to cross into the opposite lane, reducing the number of accidents, however it is not always practical or desirable to install such dividers. On such roads, measures can still be taken to improve safety, by e.g. the use of patrolling traffic enforcement personnel travelling the roads, or stationed at vantage points by the road monitoring traffic. A heightened surveillance factor of a road may decrease the rate of which drivers perform more risky overtakings or other traffic violations to avoid being caught. To improve effectiveness, instead of employing personnel to physically surveil the roads, cameras may be used overlooking a larger road section, allowing an operator to monitor and perform surveillance on long stretches of road.

Monitoring and performing surveillance on long stretches of road can be a costly and time consuming project. Advances made to the technology of cameras, image processing and computers during the last decades have allowed for automated road surveillance systems to be used in place of human operators. Surveillance systems can now detect speeding vehicles, unsafe driving and accident scenes without the use of a human to actively look at the traffic to identify these scenes. Instead, with an automated system, a human operator needs only verify the traffic violation at a later reviewing stage. In some cases, especially with speeding cameras, a fine or a court summoning may be logged and dispatched automatically without manual verification by an operator.
Another related activity is gathering statistics over the road to identify whether changes need to be made to ensure the safety or function of the road.
WO 2012/038964 A2 discloses a system for monitoring and reporting incidences of potential traffic violations for moving traffic as well as parking violations. The system further allows for a manual inspection by an operator to determine that a violation has occurred.
DE 19640938 A1 discloses another type of traffic surveillance system comprising a set of two video cameras having an overlapping surveillance area. Moreover, the images from the cameras may be used to determine speed, height and velocity of a vehicle as well as classifying the vehicle.
However, deficiencies exist with the current automated solutions, especially limited ability to identify complex traffic situations and violations. Another deficiency is a limitation in the variety of offenses that may be captured by existing solutions. There is therefore room for an improved method for traffic behaviour surveillance.

### SUMMARY OF THE INVENTION

A purpose of the invention is therefore to provide an improved method for for monitoring traffic behaviour between a plurality of vehicles.

The solution to the problem according to the invention is defined by the features of method claim 1 and system claim 9. The remaining claims contain advantageous embodiments and further developments of the invention.
For the purposes of this text, the terms stereoscopic camera and stereo camera are considered equivalent, whereby in this text the term stereoscopic camera is used.

According to one aspect of the invention, there is provided a method for monitoring traffic behaviour between a plurality of vehicles by using a stereoscopic camera device connected to a processing unit. The stereoscopic camera device includes at least a first camera and a second camera. The first camera is adapted to capture first images and the second camera is adapted to capture second images, wherein the stereoscopic camera device is adapted to be directed at a road such that the first camera and the second camera essentially monitor the same predetermined road section. Thereby, the stereoscopic camera device monitors the predetermined road section. In addition, the processing unit continuously performs the steps of:
- capturing a first image and a second image over time;
- processing said first image and said second image to produce a height image therefrom by means of the processing unit;
- analysing said height image to determine a value of at least one variable of a plurality of variables being indicative of the location of said first vehicle relative to the location of said second vehicle and the location of a third vehicle on said predetermined road section;
- comparing the determined value of the at least one variable of a plurality of variables with a predetermined condition; and
- indicating that the determined value of the at least one variable of a plurality of variables fulfils the predetermined condition.
In this manner, the method is capable of using said comparison for monitoring the traffic behaviour over time between the first vehicle and the second vehicle. Accordingly, more advanced traffic situations may be identified, one such preferable situation relates to safe overtaking, which requires that the traffic behaviour between several vehicles is monitored. Another example of a traffic situation that can be monitored by the method is the distance between a first vehicle and a second vehicle travelling in the same direction in order to monitor the traffic flow. In this type of situations it is often not enough to monitor the location of the first vehicle in isolation in order to understand and recognise if the traffic flow is smooth and appropriate or if an overtaking was conducted in a safely manner. Instead, as is described in more detail hereinafter, it is essential that the location of the first vehicle in relation to other vehicles are monitored, typically by analysing and comparing at least one variable being indicative of the location of the first vehicle in relation to the location(s) of another vehicle or several other vehicles. As such, it becomes possible to identify whether the first vehicle is travelling with an appropriate distance to adjacent vehicles and/or identify whether an overtaking by the first vehicle was sufficiently safe, taking the current prevailing conditions into consideration relating to adjacent vehicles. In this manner, the method provides an advantage over current prior art systems, which typically utilize a camera for determining position, speed, height and/or velocity of one vehicle, since the method of the present invention allows for monitoring several vehicles simultaneously to process more complex traffic situations.

Thus, the method of the present invention contributes to increase road safety, to improve traffic flow, and to protect the environment. Moreover, the present invention provides a method that enables road authorities and operators to manage, monitor and maintain their roadways more efficiently.

Typically, the processing unit may further be configured to perform the step of delivering a notification if the comparison indicates that the determined value of the at least one variable of a plurality of variables fulfils the predetermined condition. As further described hereinafter, the notification may be delivered in the form of a signal, data, images or any other type of information indicating that the determined value has fulfilled the predetermined condition.

As mentioned above, the stereoscopic camera is used for traffic behaviour surveillance. The stereoscopic camera is provided with a first camera arranged to capture a first image, and a second camera arranged to capture a second image. The first and the second camera are both directed at the same predetermined road section, such that two separate images are produced, taken at the same time, such that a height image of said predetermined road section can be produced by performing image processing on the first and second images.

Preferably, the plane of the road is arranged at essentially the same position in the first and the second image. The stereoscopic camera is angled such that it is arranged to capture the predetermined road section, with the view of the camera extending from the horizon to the vicinity of the camera. This allows the stereoscopic camera to be used for traffic behaviour surveillance on a long stretch of road, which allows for analysis of complex traffic situations which takes place over longer distances or longer time such as e.g. overtakings. The stereoscopic camera may also be directed at the road in such a way that the predetermined road section stretches from one part of the horizon to another part of the horizon by e.g. using a wide angle lens.

The stereoscopic camera is preferably mounted on a support structure, e.g. a gantry, to allow it to be placed above and over the road at a height which at least allows large vehicles to pass beneath the camera. Mounting the stereoscopic camera on a structure adjacent to the road instead of above the road is also possible. The manner in which the stereoscopic camera is mounted may depend on several factors such as e.g. the direction and topology of the predetermined road section to be monitored.

As mentioned above, the stereoscopic camera device is connected to processing means, sometimes simply denoted as the processing unit, such as a microprocessor, said processing means being arranged to receive and process images. In other words, the stereoscopic camera device is connected to a processing unit adapted to process images from the stereoscopic camera device. The processing means can be located essentially in the same structure as the stereoscopic camera, built into the same housing as the cameras, located in a housing near or on the support structure on which the stereoscopic camera is mounted, or may be located at a distance or may be connected to the stereoscopic camera by a network. The processing means is capable of performing image processing on the images captured by the stereoscopic camera to allow extraction of data from said images. The processing means performs image processing on the images captured by the stereoscopic camera to produce a height image of the road section at which the stereoscopic camera is being directed. The stereoscopic camera and the processing means are connected to a short term memory, in which the first and second images, as well as the height images are stored a predetermined time period, i.e. enough time to be processed.

Using a height image allows identification of objects on the road section, as well as determining the positions of said objects, allowing for better and higher precision traffic surveillance over current traffic surveillance solutions. Another advantage of measuring heights of objects to identify them and distinguish between them is that the problem of shadows being identified as objects is greatly reduced, which allows for more reliable and improved traffic behaviour surveillance.

Subsequently, variables for an object on the predetermined road section are determined from the height image. In other words, the height image is analysed to determine a value of at least one variable of a plurality of variables being indicative of the location of said first vehicle relative to the location of said second vehicle on said predetermined road section.

It should be readily appreciated that the term "location of the vehicle" refers to the outer parts, e.g. the outermost surfaces, edges and corners of the vehicle and typically not to the centre of the vehicle since it is essential that the method (and the system) is capable of identifying the outer parts or surfaces in order to analyse if, e.g., an overtaking is safe. Thus, a value being indicative of the location of said first vehicle relative to the location of said second vehicle on said predetermined road section typically refers to a value indicating the outer parts of the first vehicle in relation to the outer parts of the second vehicle. In other words, the height image is analysed to determine a value being indicative of the most adjacent outer parts of one vehicle in relation to the outer parts of another adjacent vehicle.

Said analysing and determining can be performed by the same processing means that performed the image processing or by additional processing means. Variables which are determined may be any of, but not limited to: speed of the object; heading of the object; position of the object relative to the traffic lane which is relevant for the heading of the object, i.e. the lane in which traffic is headed with the same heading as the object; position of the object relative to the road; distance of the object to other objects; and height of the object. Which of these variables are to be determined varies depending on the requirements put upon the system, or on the travelling state of the object. Some but not all variables, such as the speed of the object, require the use of multiple height images to be determined. Thus, in an exemplary embodiment of the invention, the stereoscopic camera continuously captures and records images, which are processed by the image processing means and subsequently used to determine variables. This allows tracking of vehicles as they move across the predetermined road section, whereby complex traffic situations can be analysed. Using multiple height images captured at different times to determine variables also allows better precision in determining the momentary value of the variables. Thus, the method may optimally, although not necessary, include the step of using multiple height images captured at different times to determine variation of a value over time of at least one variable of a plurality of variables being indicative of the location of said first vehicle relative to the location of said second vehicle on said predetermined road section.

After the value of at least one variable has been determined, the method is configured to compare the determined value of the at least one variable of a plurality of variables with a predetermined condition. Similar to the analysis of the height image and the determination sequence, the comparison sequence of the method may be carried out by the same processing unit being used for the former method step or by another processing unit.

The comparing sequence typically includes one or several computations which are performed on said determined variables to compare them to a set of predetermined conditions associated with the travel and status of a vehicle, i.e. threshold values, to determine if a vehicle fulfils any of the set of predetermined conditions. Typically, a predetermined condition is fulfilled when a threshold value relating to the condition is exceeded. Conditions are chosen to detect any of, but not limited to instances of: overtaking, speeding, through traffic, wildlife crossings; an allowed distance to oncoming traffic during overtaking; a maximum or minimum vehicle speed relative other vehicles on said predetermined road section; a maximum or minimum vehicle speed; a vehicle heading; a minimum or maximum distance between a vehicle and other vehicles on said predetermined road section; an allowed vehicle position relative the road; and a vehicle position relative the lane the vehicle is currently travelling in, or reaching a minimum or maximum threshold on e.g. travelling time on the predetermined road section. This allows for surveillance of traffic behaviour, by allowing the behaviour of vehicles to be continuously analysed and compared to predetermined conditions. As the vehicles on said predetermined road are tracked, conditions being fulfilled by vehicles can be linked to the vehicle which has fulfilled the condition.

As mentioned before, the method of the present invention enables that more advanced traffic situations may be identified, one such preferable situation relates to safe overtaking. Determining whether a vehicle performs a safe overtaking requires the use of several variables and conditions. One such traffic situation involves three vehicles, in which a first vehicle is overtaking a second vehicle travelling on a road with one lane heading in one direction and another lane heading in the opposite direction. Both the first and the second vehicles are travelling in the same direction, while a third vehicle is travelling in the opposite direction in the opposing lane. In this case, determining whether the overtaking was performed in a safe manner requires several variables and conditions. These include the speeds of the first, second, and third vehicles, the distances between the vehicles, positions of the first vehicle relative the predetermined road section, and a time spent by the first vehicle in the same lane as the third vehicle (i.e. time spent in the same lane as oncoming traffic). The variables and threshold values, at which the conditions are considered to be fulfilled, and which conditions are necessary to determine whether the overtaking was safe may differ depending on which jurisdiction and/or traffic laws govern the predetermined road section.

Accordingly, the method step of analysing the height image may further be configured to take a third vehicle into consideration. That is, in one exemplary embodiment, the method includes the step of analysing said height image to determine a value of at least one variable of a plurality of variables being indicative of the location of the first vehicle relative to the locations of the second vehicle and a third vehicle on the predetermined road section. The method step of analysing the height image may even be configured to take a fourth vehicle or several additional vehicles into consideration. As such, , in another exemplary embodiment, the method includes the step of analysing the height image to determine a value of at least one variable of a plurality of variables being indicative of the location of the first vehicle relative to the locations of the second vehicle, the third vehicle and a fourth vehicle on the predetermined road section.

Another example of a situation that can be identified is whether a road is congested or not, which also requires several variables to be determined, evaluated in relation to a set of conditions, possibly combining average speeds, travel times and/or number of vehicles.

If it turns out that the comparison indicates that the determined value of the at least one variable of a plurality of variables fulfils the predetermined condition, the method via the processing unit may be configured to perform the step of delivering a notification. The notification may be delivered in the form of a signal, data, images or any other type of information indicating that the determined value has fulfilled the predetermined condition.

As an example, the information is delivered to a memory for further processing depending on the object of the traffic monitoring system. Typically, if fulfilment of a condition or combination of conditions has occurred, which are linked to a defined situation, an occurrence of this situation is saved. What is saved can be anything from a simple boolean indicative of traffic congestion, to a counter counting occurrences of any conditions being fulfilled, to a set of images showing said situation, along with a timestamp, a date and possibly even a unique identifier identifying which condition was fulfilled.

In one exemplary embodiment, the processing unit is configured to perform the step of delivering a notification in the form of data associated with the height image. Typically, the processing unit may be configured to perform the step of delivering a notification in the form of data associated with the height image to a memory.

Accordingly, the method may typically include the step of saving the comparison if the value of the at least one variable of the plurality of the variables exceeds a threshold value, which amounts to a fulfilment of a predetermined condition. That is, the method may optimally include the step of saving an occurrence of the fulfilment. The occurrence may either be saved in a short memory or in a long term memory, as is further described hereinafter.

Preferably, if a vehicle has been determined to fulfil one of the set of predetermined conditions which correspond to a traffic violation, a recording of said violation is saved, preferably along with data relevant to the violation such as a timestamp, date, an identifier identifying which condition was fulfilled, i.e. which traffic law was violated etc. In other words, there are several different possibilities of delivering a notification by the processing unit. The ultimate set-up for taking care of the notification is dependent on the object of the monitoring system.

In one advantageous development of the invention, when a vehicle has been deemed to fulfil a predetermined condition corresponding to a traffic violation, data saved in the short term memory relevant to the traffic violation, such as e.g. a set of images capturing the violation, either unprocessed, processed or both, are stored into a long term memory. Occurrences may be stored continuously or at intervals in the long term memory. Storing images captured in a long term memory allows these images to be used as evidence of the fulfilling of the condition, especially important for conditions relating to traffic violations.

Equipping a road with advanced traffic behaviour surveillance according to the invention allows the catching of hazardous drivers, which were previously difficult to detect. Similarly, the knowledge of such surveillance being performed on a road section may influence drivers not to perform hazardous driving manoeuvres. In either way, the safety of the road can be increased, and at a far lower cost and higher efficiency than what could be accomplished by employing operators studying traffic cameras or that of traffic patrols. Further, the images captured may be used as evidence by law enforcement, e.g. when prosecuting drivers charged with traffic violations.

Additionally, the size of a vehicle may be detected. This may be used for e.g. classification purposes, identifying a type of vehicle based on e.g. its size. Further, the system could be configured to only associate certain predetermined conditions with a certain type of vehicle, such as e.g. not allowing trucks or other large vehicles to overtake, or having different threshold values for a certain type of vehicles.

In an advantageous development of the invention, a license plate image of the license plate of a vehicle determined to have fulfilled a condition is also captured. This capture may be performed at a specific capture point or at any point which allows for a good image of the license plate to be captured. This license plate image may be captured by the stereoscopic camera, but in an alternative development of the invention, a third camera is used to capture this image, preferably suspended on the same support structure as the stereoscopic camera. The license plate image may subsequently be stored together with and linked with other data relevant to the fulfilling of a condition, such as e.g. images showing the fulfilling of a predetermined condition. This allows a vehicle fulfilling a condition to be identified through e.g. a register of license plates.

In another advantageous development of the invention, an image of the driver of a vehicle determined to have fulfilled a condition is also captured. As with the license plate image, this capture may be performed at a specific capture point or at any point which allows for a good image of the driver to be captured. This image of a driver may be captured by the stereoscopic camera, but in an alternative development of the invention, a fourth camera is used to capture this image, preferably suspended on the same support structure as the stereoscopic camera. Like with the license plate image, this image of a driver may subsequently be stored together with and linked with other data relevant to the fulfilling of a condition, such as e.g. images showing the fulfilling of a predetermined condition. This allows the driver of a vehicle which fulfils a condition to be identified, which may be necessary in certain jurisdictions to prosecute traffic violations. Note that traffic behaviour surveillance according to the invention may contain both capture a license plate image, and an image of a driver, only one of them, or neither of them depending on the requirements put on the system.

Data relevant to the occurrence of a fulfilment of a predetermined condition may be transmitted for further processing or use as e.g. evidence. A network may also be used to control and configure the cameras, processing means or memory, and may also further be used to modify the predetermined conditions.

The processing means may also be arranged to process the images in ways which reduce the size of the data needed to be stored or transmitted. This include reducing the number of images to be stored or transmitted, reducing the resolution of images to be stored or transmitted or performing partial resolution reduction on areas of said images which are predetermined to be of lesser priority. In one alternative embodiment, these areas with lesser priority are omitted.

### BRIEF DESCRIPTION OF THE DRAWINGS

The invention will be described in greater detail in the following, with reference to the embodiments that are shown in the attached schematic drawings, in which
- Fig. 1a, b: shows a schematic view of a stereoscopic camera monitoring a road section,
- Fig. 2a, b: shows a schematic view from a camera monitoring a predetermined road section during an overtaking,
- Fig. 3a, b: shows a schematic of a height image of a predetermined road section during an overtaking,
- Fig. 4: shows a flowchart over a method for traffic behaviour surveillance, and
- Fig. 5: shows a schematic of a system for traffic behaviour surveillance.

### DETAILED DESCRIPTION

The embodiments of the invention with further developments described in the following are to be regarded only as examples and are in no way to limit the scope of the protection provided by the patent claims.

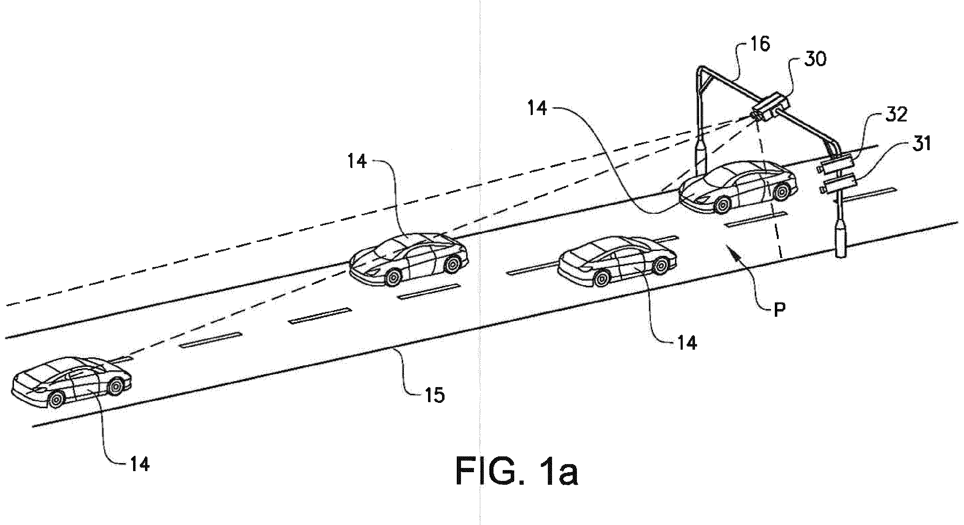

Fig. 1a shows a road section which is part of a predetermined road section 15 being monitored by a stereoscopic camera 30 according to the invention. On said predetermined road section 15, vehicles 14 are positioned and currently travelling along said predetermined road section 15. The stereoscopic camera 30 is suspended on a support structure 16 above said predetermined road section 15.

The stereoscopic camera 30 is provided with a first camera adapted to capture a first image and a second camera adapted to capture a second image. The stereoscopic camera 30 is directed at said road such that both the first and the second camera essentially monitors the same predetermined road section 15, and said stereoscopic camera 30 thereby monitors said predetermined road section 15 and continuously captures said first and second images.

The support structure 16 may be any support structure which allows for the stereoscopic camera 30 to be suspended at a height above said predetermined road section 15. In Fig. 1a the support structure 16 stretches from one side of the road to the other, and allows the stereoscopic camera 30 to be suspended straight above the predetermined road section 15 at a height sufficient for large vehicles such as e.g. trucks, tractors and mobile cranes to pass beneath the support structure 16 and stereoscopic camera 30. In another development of the invention, the support structure (not shown) instead extends from the side of the road to above the predetermined road section 15, such that the stereoscopic camera 30 is suspended straight above the predetermined road section 15. The support structure 16 may also allow the stereoscopic camera 30 to be suspended adjacent to said predetermined road section 15, at a height at which said stereoscopic camera 30 overlooks said predetermined road section 15.

The predetermined road section 15 at which the stereoscopic camera 30 is directed extends from essentially below the stereoscopic camera 30 to essentially the horizon, in such a way that the stereoscopic camera 30 monitors the road for as extensive of a distance as possible or desirable.

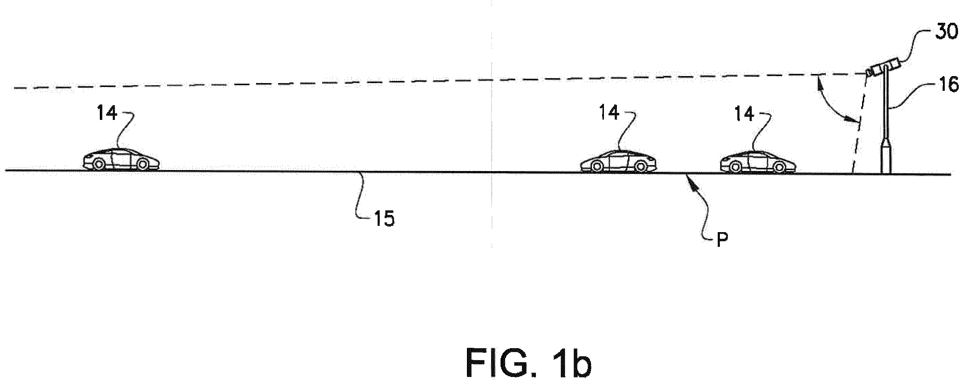

Fig. 1b shows a side view of a road section, part of which is being monitored by a stereoscopic camera 30 according to the invention. Here the predetermined road section 15 stretches from essentially below the stereoscopic camera 30 to essentially the horizon, and said camera 30 is mounted on a support structure 16. Vehicles 14 travelling on the road are being monitored as long as they are within the view of the stereoscopic camera. Not shown in fig. 1b are the optional third camera 31 and fourth camera 32 (shown in fig. 1a) adapted to capture a license plate image and an image of a driver respectively as the vehicle passes a capture point P.

The stereoscopic camera 30 is connected to processing means 35 such as a microprocessor. Said processing means 35 performs image processing on said first and second images to produce a height image 20 of said predetermined road section 15. In one exemplary embodiment of the invention, these height images 20 are continuously produced by the processing means 35. Performing this image processing to produce a height image 20 is known in the art and will not be further described herein.

Said processing means 35 are further adapted to determine, whether vehicles 14 on said predetermined road section 15 fulfils any of a number of predetermined conditions associated with said vehicles 14. This is done by the system by analysing said height images 20 in order to determine for one or a plurality of vehicles 14 on the predetermined road section 15 a plurality of variables. These variables are then compared to value thresholds to determine whether any of a set of predetermined conditions has been fulfilled. By analysing, for one or a set of vehicles 14, which conditions are fulfilled, and which are not, the traffic situations which take place on the predetermined road section 15 can be determined. In one exemplary embodiment, these variables are continuously updated as new height images 20 are produced in order to track vehicles 14 on the predetermined road section 15.

The variables that make up said plurality of variables are those variables which are necessary to determine whether a vehicle 14 located on the predetermined road section 15 fulfils any of the predetermined conditions. Thus the variables that results from the analysis of the height images 20 may differ from one system to the next, as the predetermined conditions may differ between systems. Variables which are determined may be any of, but not limited to: speed of the vehicle 14; heading of the vehicle 14; position of the vehicle 14 relative to the traffic lane which is relevant for the heading of the vehicle 14, i.e. the lane in which traffic is headed with the same heading as the vehicle 14; position of the vehicle 14 relative to the road; distance between the vehicle 14 to another vehicle 14; and height of the object.

It should be readily appreciated that although several variable may be determined, it is enough for the method and the system to determine a value of at least one variable of a plurality of variables being indicative of the location of the first vehicle relative to the location of a second vehicle on the predetermined road section 15.

Computations are then performed on the plurality of variables to determine whether a vehicle 14 has fulfilled any of a predetermined number of conditions. In one exemplary embodiment, these computations are continuously performed as the variables are updated.

The predetermined conditions may include for one or each vehicle 14: an allowed distance to oncoming traffic during overtaking; a maximum or minimum vehicle 14 speed relative other vehicles 14 on said predetermined road section 15; a maximum or minimum vehicle 14 speed; a vehicle 14 heading; a minimum or maximum distance between a vehicle 14 and other vehicles 14 on said predetermined road section 15; an allowed vehicle 14 position relative the road; and a vehicle 14 position relative the lane the vehicle 14 is currently travelling in.

In one development of the invention, the predetermined conditions correlate to traffic laws, such that fulfilling a predetermined condition constitutes a violation of a traffic law, and instances of: vehicles 14 being located on said predetermined road section 15, vehicles 14 performing overtaking, speeding, through traffic, wildlife crossing, or traffic congestion. In a further development of the invention, the traffic situations which, by analysis of the conditions fulfilled, are determined to occur, correspond to traffic laws.

Which conditions are part of the predetermined conditions may depend on the requirements put on the system, such as e.g. whether the system is to be used for statistical traffic behaviour surveillance or traffic violation surveillance, and may further depend on the applicable traffic laws in the jurisdiction governing the road to be monitored.

In one development of the invention, the size of a vehicle 14 is detected. A vehicle can be classified i.e. the type of vehicle 14 may be identified. based on e.g. its size or height. Further, the system may configured to only associate certain predetermined conditions with a certain type of vehicle 14, such as to e.g. not allow trucks or other large vehicles 14 to overtake, or having different threshold values for a certain type of vehicles 14. This may also include e.g. different speed limits, or allowed vehicle positions relative the road for e.g. trucks and buses.

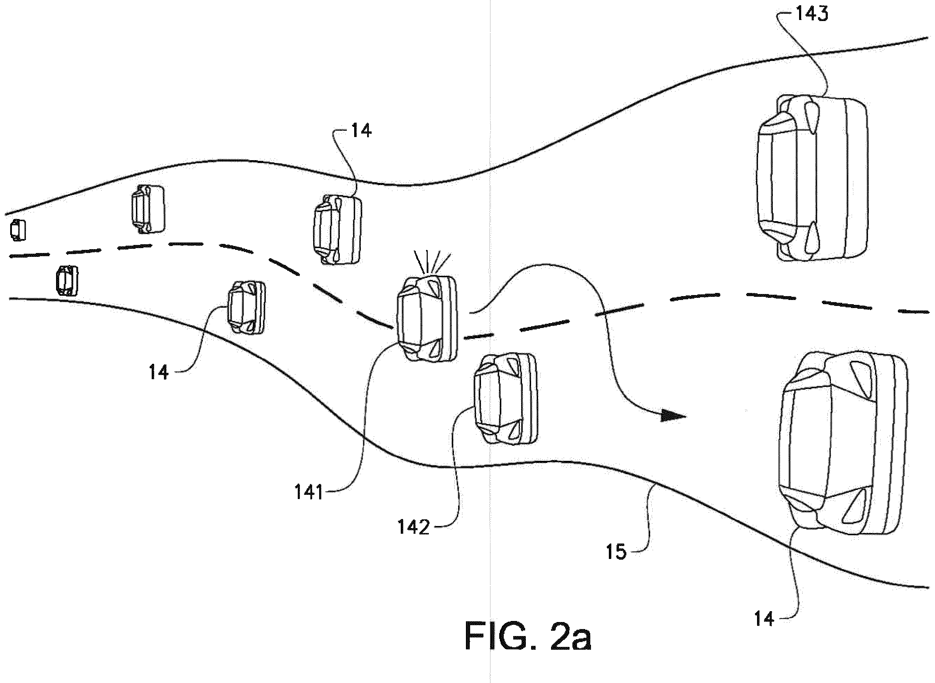

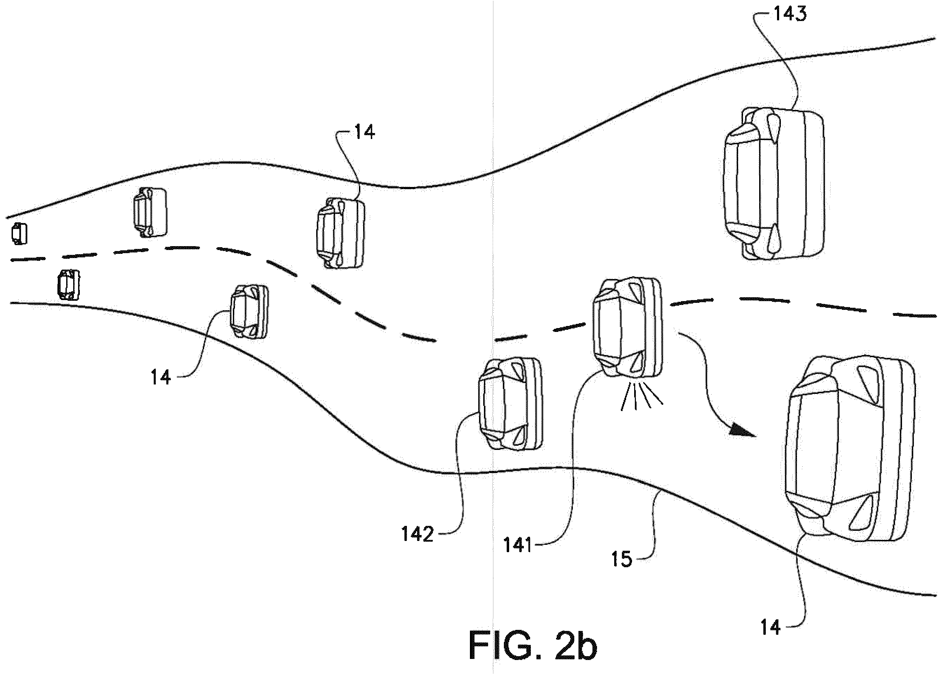

In one exemplary embodiment of the invention, the invention is used for monitoring traffic behaviour between a plurality of vehicles. One example of this type of traffic situation relates to overtaking, which is described hereinafter. Figs. 2a and 2b each show an image from the first or the second camera overlooking a predetermined road section 15, taken at a first and second time respectively. In practice, the stereoscopic camera 30 takes more images, but for brevity, only two are shown. In other words, the camera is adapted to capture a first image and a second image over time. Since the camera is connected to a processing unit, as described in relation to the previous figures, the processing unit here is configured to process the first image and the second image to produce a height image 20.

In Fig. 2a, a first vehicle 141 is in the process of travelling into the opposing lane in order to overtake a second vehicle 142. A third vehicle 143 is travelling in the opposite direction in the opposing lane. In Fig. 2b, the first vehicle 141 has passed the second vehicle 142 and is returning to its original lane to complete the overtaking of the second vehicle 142. The third vehicle 143 is now about to pass said first and second vehicles 141, 142.

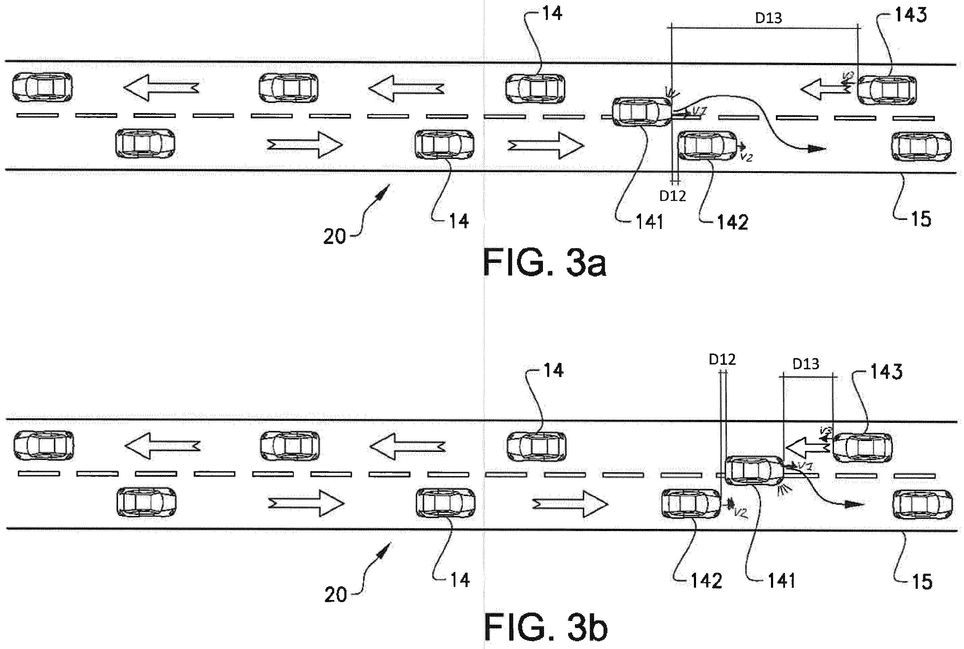

Figs. 3a and 3b each shows a height image 20 over the predetermined road section 15, at said first and second time respectively. The height image 20 is the product of the process described above/performing image processing by the processor 35 on the first and second images. The processing unit 35 performs analysis on this height image to determine any of a plurality of variables. In this example embodiment, the height image 20 is analysed to determine a value of at least one variable of a plurality of variables being indicative of the location of the first vehicle 141 relative to the location of the second vehicle 142 and the third vehicle 143 on the predetermined road section. However, it should be readily appreciated that the height image 20 can be analysed to determine a value of at least one variable of a plurality of variables being indicative of the location of the first vehicle 141 relative to the location of the second vehicle 142, only.

The selection and content of the variables described in relation to figures 1a and 1b are likewise applicable to the exemplary embodiment described in relation to figs. 2a, 2b, 2a and 3b as long as they can provide values indicative of the location of the first vehicle relative to other vehicles.

As an example, in fig. 3a, the location of the first vehicle relative to the location of the second vehicle here refers to the distance between said vehicles D12. Analogously, the location of the first vehicle relative to the location of the third vehicle here refers to the distance between said vehicles D13. Thus, a value indicating the location of a vehicle typically refers to the location of the outer parts or surfaces of said vehicle since the outer parts are most critical to identify when analysing whether an overtaking is safe or not.

Analysing the height image in order to determine the outer parts or surfaces of a vehicle and the most adjacent parts or surfaces of a vehicle to another vehicle are known in the art and will therefore not be further described herein.

In the example situation shown in Figs. 2a, 2b, 3a, and 3b, the first vehicle 141 will first be determined to be crossing into the opposing lane, as the variable related to the first vehicle 141 position relative the traffic lane the first vehicle 141 is currently travelling will be determined to have reached a threshold. A condition of a vehicle leaving his lane will thus be fulfilled. As the first vehicle 141 passes the second vehicle 142, the variable related to distances between vehicles will reach a threshold indicating that the first vehicle 141 has passed the second vehicle 142, fulfilling the relevant condition. As the first vehicle 141 returns to the lane headed in the same direction as the first 141 and second vehicles 142, the variable related to the position of the first vehicle 141 relative the traffic lane the first vehicle 141 is currently travelling will once again be determined to reach a threshold, fulfilling the relevant condition of having changed lanes. Using the data of the fulfilled conditions, the first vehicle 141 will be determined to have overtaken the second vehicle 142, and a condition corresponding to an overtaking will be considered to have been fulfilled. Accordingly, the invention here is configured to compare the determined value of the at least one variable of a plurality of variables with a predetermined condition. Typically, as mentioned above, several variables are determined and compared with several predetermined conditions. However, it should be readily appreciated that, in some situations, it may suffice to compare one variable with a predetermined condition.

Another determining which will be performed is whether the overtaking was safe or legal; this might e.g. be dependent on e.g. the distance D13 between the first vehicle 141 and the third vehicle 143, the distance D12 between the first vehicle 141 and the second vehicle 142, how close the vehicle 141 was to colliding with the second vehicle 142 or the third vehicle 143, based on the speed V1, V2, V3 of each of the three vehicles 141142 143, and whether overtaking was allowed in that particular area.

If the comparison indicates that the determined value of the at least one variable of a plurality of variables fulfils the predetermined condition, the processing unit 35 here is configured to perform the step of delivering a notification. In this exemplary embodiment, the notification is delivered in the form of data to a memory. The notification may include data, integers, images etc. and can be delivered in several different ways. In addition, or alternatively, the notification may be delivered in the form of a signal, indicating that the determined value of the at least one variable of a plurality of variables fulfils the predetermined condition

In this exemplary embodiment, the processing unit 35 is configured to perform the step of delivering a notification in the form of data associated with the height image to a memory.

An occurrence of said fulfilment is here subsequently saved. In one embodiment of the invention, this is done by modifying an integer in a memory, said integer being for instance e.g. a counter counting the number of vehicles 14 currently travelling the predetermined road section. Other possibilities include the number of vehicles 14 having passed the predetermined road section 15. In a further development of the invention, the saving of said occurrence includes more data, such as e.g. a timestamp and a date for when a vehicle 14 travelled on the predetermined road section 15. The data recorded from an occurrence may also be used indirectly, such as e.g. to determine an average vehicle 14 speed or average number of vehicles 14 travelling on the predetermined road section 15.

In a further development of the invention, the data saved is comprised of a set of images from the stereoscopic camera 30. The images saved may be unmodified images from one of or both the first and second camera which make up the stereoscopic camera 30. The images saved may also be the height image 20. Preferably, the images saved show the fulfilment of at least one of the predetermined conditions. These images may later be used as evidence to e.g. prove that a traffic violation occurred. Thus, it is preferred that additional data be saved along with the images, such as e.g. a timestamp, a date and possibly an indication of which condition was fulfilled, where said condition fulfilment may correlate to a traffic rule violation.

In a further development of the invention, the step of saving an occurrence, whether said occurrence is saved as an integer, a set of images or any other form of data, comprises storing data indicative of said fulfilling of a predetermined condition to a persistent storage.

In a further development of the invention, a third image is captured, said image being an image of a license plate of a vehicle determined to have fulfilled any of the predetermined conditions is also captured and stored together with other images being indicative of said fulfilling of predetermined conditions.

In one development of the invention, the license plate number may be determined from the license plate image, and if e.g. an overtaking was determined to be performed in an unsafe or illegal manner, a traffic fine or the like may be automatically dispatched by the system.

In another development of the invention, a fourth image is captured, said image being an image of a driver of a vehicle determined to have fulfilled any of the predetermined conditions is also captured and stored together with other images being indicative of said fulfilling of predetermined conditions.

Said third and fourth images may be captured by the first or the second camera, and preferably as the vehicle 14 having fulfilled said predetermined condition passes a capture point P, said capture point P selected as one which allows for a sufficiently good image of said license plate or driver of said vehicle 14.

Shown in Fig. 1a is an optional third camera 31, said third camera 31 adapted to capture an image of the license plate of a vehicle 14 considered to have fulfilled one of the predetermined conditions. Said third camera 31 is also suspended on the support structure 16 along with the rest of the cameras. Said third camera 31 may be directed at a capture point P for capturing an image of said license plate, said capture point P selected as one which allows a license plate number of the vehicle 14 to be determined by visual inspection or a license plate number algorithm from the captured image when said image is taken as said vehicle 14 passes the capture point P.

Also shown in Fig. 1a is an optional fourth camera 32, said fourth camera 32 adapted to capture an image of a driver or an operator of a vehicle 14 considered to have fulfilled one of the predetermined conditions. Said fourth camera 32 is also suspended on the support structure 16 along with the rest of the cameras. Said fourth camera 32 may be directed at a capture point P for capturing an image of said driver or operator, said capture point P selected as one which allows for a driver of the vehicle 14 to be identified by visual inspection or facial recognition algorithm from the captured image when said image is captured as said vehicle 14 passes the capture point P. In an alternative development of the invention, the image of a driver or operator of a vehicle 14 considered to have fulfilled one of the predetermined conditions is captured by the third camera 31.

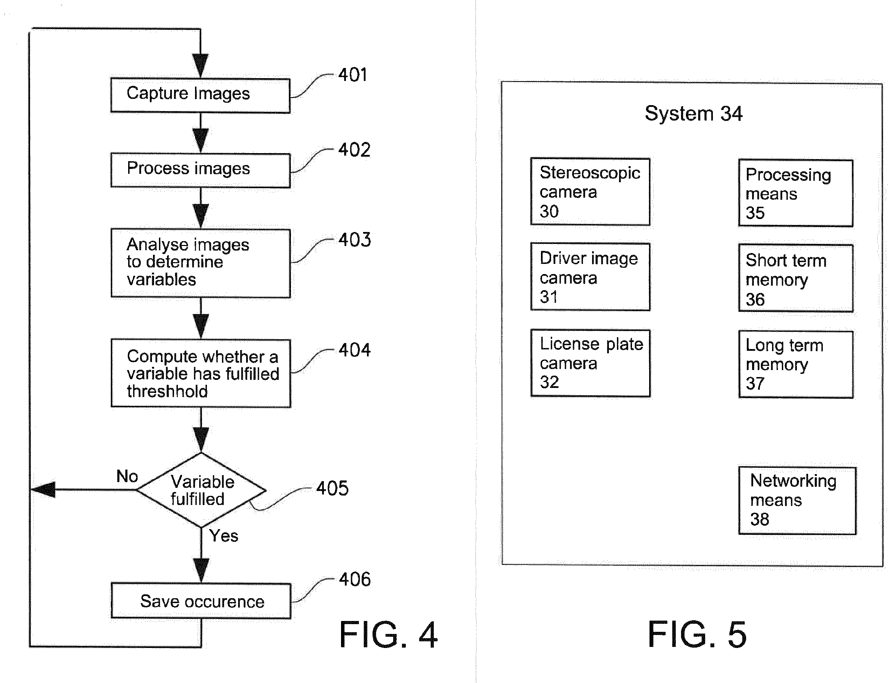

A flowchart of a method according to the invention is shown in figure 4. The method comprises the steps of: capturing 401 a first and a second image; processing 402 said images to produce a height image 20 thereof, typically by means of the processing unit; analysing 403 said height image 20 to determine a value of at least one variable of a plurality of variables being indicative of the location of the first vehicle relative to the location of the second vehicle on said predetermined road section 15; comparing 404 the determined value of the at least one variable of a plurality of variables with a predetermined condition 15; and indicating that the determined value of the at least one variable of a plurality of variables fulfils the predetermined condition. Typically, the method may be configured to deliver a notification if the comparison indicates that the determined value of the at least one variable of a plurality of variables fulfils the predetermined condition. As mentioned above, the processing unit 35 is here configured to perform the step of delivering a notification if the comparison indicates that the determined value of the at least one variable of a plurality of variables fulfils the predetermined condition.

It should be readily appreciated that the first vehicle and the second vehicle are located on said predetermined road section 15, and that at least one of a plurality of variables depending on the travelling state of the vehicles are to be determined.

In relation to comparing 404, which typically involves a computing procedure, the method compares whether any of said plurality of variables has fulfilled any of predetermined number of conditions associated with said vehicles; and if not; begin anew with said step of capturing 401 images; otherwise, the method indicates that the determined value of the at least one variable of a plurality of variables fulfils the predetermined condition.

Typically, the method may thereafter be configured to deliver a notification if the comparison indicates that the determined value of the at least one variable of a plurality of variables fulfils the predetermined condition.

The method is here also operated to save 406 an occurrence of said fulfilment of a predetermined condition; and subsequently begin anew with said step of capturing 401 images.

As mentioned above, the method uses a stereoscopic camera device 30 connected to the processing unit 35. The stereoscopic camera device here includes at least a first camera and a second camera, wherein the first camera is adapted to capture first images and the second camera is adapted to capture second images. In addition, the stereoscopic camera device is adapted to be directed at a road such that the first camera and the second camera essentially monitor the same predetermined road section 15. Thereby, the stereoscopic camera device 30 monitors the predetermined road section 15.

In one development of the invention, the step of saving 406 an occurrence comprises storing a set of images from the stereoscopic camera 30 showing said fulfilling of a predetermined condition in a long term memory.

In one development of the invention, the method further comprises the steps of: capturing a third image of a license plate of a vehicle 14 determined to have fulfilled any of said predetermined conditions; and storing said third image in a persistent storage and linked to said stored set of images from said first and second camera.

In one development of the invention, the method further comprises the steps of: capturing a fourth image of a driver of a vehicle 14 determined to have fulfilled any of said predetermined conditions, where said image capture of a driver is performed as said vehicle passes a predetermined capture point; and storing said fourth image in a persistent storage and linked to said stored set of images from said first and second camera.

In one development of the invention the method further comprises the step of: transmitting 407, the recorded, saved or stored data relevant to said fulfilling of said predetermined conditions. This transmission is preferably done to a receiver capable of storing the data, or to allow the data to be accessed by law enforcement, to be used as evidence in the prosecuting of a traffic violation.

In one development of the invention the method further comprises the step of: before images relevant to said fulfilling of said predetermined conditions are saved or transmitted, process said images further to reduce the resolution of areas of the images with low priority, such as e.g. areas of the captured image which do not contain roads. The amount of images to be transferred may also be reduced.

Fig. 5 shows a schematic of a system for traffic behaviour surveillance according to the invention. The system comprises a stereoscopic camera device 30, a processing unit 35 adapted to process images from said stereoscopic camera device 30, short term memory means 36 and long term memory means 37. The stereoscopic camera 30 is provided with a first camera adapted to capture a first image, and a second camera adapted to capture a second image. The stereoscopic camera 30 is directed at a road such that both the first and second camera essentially monitors the same predetermined road section 15 and said stereoscopic camera device 30 thereby monitors said predetermined road section 15. Images captured by said stereoscopic camera 30 are continuously stored into the short term memory 36. The first and second images are processed to produce a height image of said predetermined road section (using said processing unit). The system performs a method according to the above.

In a further development of the invention, the system is further equipped with a license plate camera 31 adapted to capture a license plate image of a vehicle passing a capture point. In a further yet development of the invention the system is further equipped with a driver image camera 32 adapted to capture an image of a driver of a vehicle passing a capture point.

In a further development of the invention, the system is equipped with networking means 38, said networking means 38 enabling the system to transmit data relevant to the fulfilling of a predetermined condition across a network.

## Claims

1. Method for monitoring traffic behaviour between a plurality of vehicles by using a stereoscopic camera device (30) connected to a processing unit (35), said stereoscopic camera device (30) comprising at least a first camera and a second camera, wherein said first camera is adapted to capture first images and said second camera is adapted to capture second images, wherein said stereoscopic camera device is adapted to be directed at a road such that the first camera and the second camera essentially monitor the same predetermined road section (15), said stereoscopic camera device (30) thereby monitors said predetermined road section (15), wherein the processing unit (35) continuously performs the steps of:
capturing a first image and a second image over time;
processing said first image and said second image to produce a height image (20) therefrom by means of the processing unit (35);
analysing said height image (20) to determine a value of at least one variable of a plurality of variables being indicative of the location of a first vehicle relative to the location of a second vehicle and the location of a third vehicle on said predetermined road section (15);
comparing the determined value of the at least one variable of a plurality of variables with a predetermined condition; and
indicating that the determined value of the at least one variable of a plurality of variables fulfils the predetermined condition.

2. Method according to claim 1, wherein said predetermined condition at least include one of: an allowed distance to oncoming traffic during overtaking; a maximum or minimum vehicle (14) speed relative other vehicles (14) on said predetermined road section (15); a minimum or maximum distance between a vehicle (14) and other vehicles (14) on said predetermined road section (15).

3. Method according to any one of the preceding claims, wherein the method further comprises the step of saving an occurrence of said fulfilment.

4. Method according to claim 3, wherein said step of saving an occurrence comprises storing a set of images from said first and second camera showing said fulfilling of predetermined condition in a long term memory (37).

5. Method according to claim 4, wherein the method further comprises the steps of: capturing a third image of a license plate of a vehicle (14) determined to have fulfilled any of said predetermined conditions; and storing said third image in a long term memory (37) and linked to said stored set of images from said first and second camera.

6. Method according to any one of claims 4 to 5, wherein the method further comprises the steps of: capturing a fourth image of a driver of a vehicle (14) determined to have fulfilled any of said predetermined conditions, where said image capture of a driver is performed as said vehicle (14) passes a predetermined capture point (P); and storing said fourth image in a long term memory (37) and linked to said stored set of images from said first and second camera.

7. Method according to any of claims 3 to 6, wherein the method further comprises, transmitting recorded or stored data relevant to said fulfilling of said predetermined conditions.

8. Method according to any one of the preceding claims, wherein the method further includes the step of using multiple height images captured at different times to determine variation of a value over time of at least one variable of a plurality of variables being indicative of the location of said first vehicle relative to the location of said second vehicle on said predetermined road section.

9. System (34) for traffic behaviour surveillance, wherein said system (34) comprises:
• a stereoscopic camera device (30),
• a processing unit (35) adapted to process images from said stereoscopic camera (30),
• a short term memory (36), and
• a long term memory (37),
wherein said stereoscopic camera device (30) is monitoring a predetermined road section, wherein images captured by said stereoscopic camera (30) are continuously stored into said short term memory (36), wherein said first and second images are processed to produce a height image (20) of said predetermined road section (15), **characterised in that** the system is performing a method according to any of claims 1 to 8.

10. System (34) according to claim 9, wherein said system further is provided with a third camera (31) adapted to capture a licence plate image of a vehicle passing a capture point (P).

11. System (34) according to any of claims 9 to 10, wherein said system (34) is further provided with a fourth camera (32) adapted to capture an image of a driver of a vehicle passing a capture point (P).

12. System (34) according to claim 10, wherein a capturing of said licence plate image or said image of a driver is triggered by a predetermined condition being determined to be fulfilled and said licence plate image or said image of a driver is linked with and stored with said recording.

## Patentansprüche

1. Verfahren zur Überwachung des Verkehrsverhaltens zwischen einer Vielzahl von Fahrzeugen durch Verwendung einer mit einer Verarbeitungseinheit (35) verbundenen stereoskopischen Kameravorrichtung (30), wobei die stereoskopische Kameravorrichtung (30) zumindest eine erste Kamera und eine zweite Kamera umfasst, wobei die erste Kamera dazu ausgelegt ist, erste Bilder aufzunehmen, und die zweite Kamera dazu ausgelegt ist, zweite Bilder aufzunehmen, wobei die stereoskopische Kameravorrichtung so ausgelegt ist, dass sie auf eine Straße gerichtet wird, damit die erste Kamera und die zweite Kamera im Wesentlichen denselben vorbestimmten Straßenabschnitt (15) überwachen, wobei die stereoskopische Kameravorrichtung (30) dadurch den vorbestimmten Straßenabschnitt (15) überwacht, wobei die Verarbeitungseinheit (35) kontinuierlich die folgenden Schritte ausführt:
Aufnahme eines ersten Bildes und eines zweiten Bildes im Zeitablauf;
Verarbeitung des ersten Bildes und des zweiten Bildes zur Erzeugung eines Höhenbildes (20) daraus mittels der Verarbeitungseinheit (35);
Auswertung des Höhenbildes (20) zur Bestimmung eines Wertes zumindest einer Variablen einer Vielzahl von Variablen, die den Standort eines ersten Fahrzeugs in Bezug auf den Standort eines zweiten Fahrzeugs und den Standort eines dritten Fahrzeugs im vorbestimmten Straßenabschnitt (15) anzeigen;
Vergleichen des bestimmten Wertes der zumindest einen Variablen einer Vielzahl von Variablen mit einer vorbestimmten Bedingung; und
Angabe, dass der bestimmte Wert der zumindest einen Variablen einer Vielzahl von Variablen die vorbestimmte Bedingung erfüllt.

2. Verfahren nach Anspruch 1, wobei die vorbestimmte Bedingung umfasst zumindest einen von: einem erlaubten Abstand zum Gegenverkehr während des Überholens; einer maximalen oder minimalen Geschwindigkeit eines Fahrzeugs (14) bezogen auf andere Fahrzeuge (14) im vorbestimmten Straßenabschnitt (15); einem Mindest- oder Maximalabstand zwischen einem Fahrzeug (14) und anderen Fahrzeugen (14) im vorbestimmten Straßenabschnitt (15).

3. Verfahren nach einem der vorhergehenden Ansprüche, wobei das Verfahren ferner den Schritt des Speicherns eines Auftretens der Erfüllung umfasst.

4. Verfahren nach Anspruch 3, wobei der Schritt des Speicherns eines Auftretens das Speichern eines Satzes von Bildern von der ersten und zweiten Kamera umfasst, die das Erfüllen einer vorbestimmten Bedingung in einem Langzeitspeicher (37) zeigen.

5. Verfahren nach Anspruch 4, wobei das Verfahren ferner die folgenden Schritte umfasst: Aufnahme eines dritten Bildes eines Nummernschildes eines Fahrzeugs (14), von dem bestimmt wird, die vorbestimmten Bedingungen erfüllt zu haben; und Speichern des dritten Bildes in einem Langzeitspeicher (37) und mit dem gespeicherten Satz von Bildern von der ersten und zweiten Kamera verknüpft.

6. Verfahren nach einem der Ansprüche 4 bis 5, wobei das Verfahren ferner die folgenden Schritte umfasst: Aufnahme eines vierten Bildes eines Fahrers eines Fahrzeugs (14), von dem bestimmt wird, die vorbestimmten Bedingungen erfüllt zu haben, wobei die Bildaufnahme eines Fahrers durchgeführt wird, wenn das Fahrzeug (14) einen vorbestimmten Aufnahmepunkt (P) passiert; und Speichern des vierten Bildes in einem Langzeitspeicher (37) und mit dem gespeicherten Satz von Bildern von der ersten und zweiten Kamera verknüpft.

7. Verfahren nach einem der Ansprüche 3 bis 6, wobei das Verfahren ferner das Übertragen aufgezeichneter oder gespeicherter, für das Erfüllen der vorbestimmten Bedingungen relevanter Daten umfasst.

8. Verfahren nach einem der vorhergehenden Ansprüche, wobei das Verfahren ferner den Schritt des Verwendens von mehreren, zu verschiedenen Zeitpunkten aufgenommenen Höhenbildern, um im Zeitablauf eine Veränderung eines Wertes zumindest einer Variablen einer Vielzahl von Variablen, welche den Standort des ersten Fahrzeugs in Bezug auf den Standort des zweiten Fahrzeugs im vorbestimmten Straßenabschnitt anzeigen, zu bestimmen.

9. System (34) zur Überwachung des Verkehrsverhaltens, wobei das System (34) umfasst:
• eine stereoskopische Kameravorrichtung (30),
• eine Verarbeitungseinheit (35), die dazu ausgelegt ist, Bilder von der stereoskopischen Kamera (30) zu verarbeiten,
• einen Kurzzeitspeicher (36) und
• einen Langzeitspeicher (37),
wobei die stereoskopische Kameravorrichtung (30) einen vorbestimmten Straßenabschnitt überwacht, wobei von der stereoskopischen Kamera (30) aufgenommene Bilder kontinuierlich in dem Kurzzeitspeicher (36) gespeichert werden, wobei die ersten und zweiten Bilder verarbeitet werden, um ein Höhenbild (20) des vorbestimmten Straßenabschnitts (15) zu erzeugen, **dadurch gekennzeichnet, dass** das System ein Verfahren nach einem der Ansprüche 1 bis 8 durchführt.

10. System (34) nach Anspruch 9, wobei das System ferner mit einer dritten Kamera (31) versehen ist, die dazu ausgelegt ist, ein Nummernschildbild eines einen Aufnahmepunkt (P) passierenden Fahrzeugs aufzunehmen.

11. System (34) nach einem der Ansprüche 9 bis 10, wobei das System (34) ferner mit einer vierten Kamera (32) versehen ist, die dazu ausgelegt ist, ein Bild eines Fahrers eines einen Aufnahmepunkt (P) passierenden Fahrzeugs aufzunehmen.

12. System (34) nach Anspruch 10, wobei eine Aufnahme des Nummernschildbildes oder des Bildes eines Fahrers durch eine vorbestimmte Bedingung ausgelöst wird, die dazu bestimmt ist, erfüllt zu werden, und das Nummernschildbild oder das Bild eines Fahrers mit der Aufzeichnung verknüpft und mit ihr gespeichert wird.

## Revendications

1. Procédé destiné à la surveillance du comportement du trafic parmi une pluralité de véhicules par l'utilisation d'un dispositif de caméra stéréoscopique (30) connecté à une unité de traitement (35), ledit dispositif de caméra stéréoscopique (30) comprenant au moins une première caméra et une deuxième caméra, dans lequel ladite première caméra est conçue pour capturer des premières images et ladite deuxième caméra est pour capturer des deuxièmes images, dans lequel ledit dispositif de caméra stéréoscopique est conçu pour être orienté vers une route si bien que la première caméra et la deuxième caméra surveillent essentiellement la même section de route prédéterminée (15), ledit dispositif de caméra stéréoscopique (30) surveille ainsi ladite section de route prédéterminée (15), dans lequel l'unité de traitement (35) effectue en continu les étapes consistant à :
capturer une première image et une deuxième image avec le temps ;
traiter ladite première image et ladite deuxième image afin de réaliser une image en hauteur (20) à partir de celles-ci au moyen de l'unité de traitement (35) ;
analyser ladite image de hauteur (20) pour déterminer une valeur d'au moins une variable d'une pluralité de variables étant indicative d'un emplacement d'un premier véhicule par rapport à l'emplacement d'un deuxième véhicule et à l'emplacement d'un troisième véhiculer sur ladite section de route prédéterminée (15) ;
comparer la valeur déterminée de l'au moins une variable d'une pluralité de variables avec une condition prédéterminée ; et
indiquer que la valeur déterminée de l'au moins une variable d'une pluralité de variables remplit la condition prédéterminée.

2. Procédé selon la revendication 1, dans lequel ladite condition prédéterminée comprend au moins l'un : d'une distance autorisée au trafic venant en sens inverse pendant le dépassement ; d'une vitesse maximale ou minimale du véhicule (14) par rapport aux autres véhicules (14) sur ladite section de route prédéterminée (15) ; d'une distance minimale ou maximale entre un véhicule (14) et d'autres véhicules (14) sur ladite section de route prédéterminée (15).

3. Procédé selon l'une quelconque des revendications précédentes, dans lequel le procédé en outre comprend l'étape consistant à sauvegarder une occurrence de ladite satisfaction.

4. Procédé selon la revendication 3, dans lequel ladite étape consistant à sauvegarder une occurrence comprend la mémorisation d'un ensemble d'images provenant desdites première et deuxième caméras montrant ladite satisfaction de la condition prédéterminée dans une mémoire à long terme (37).

5. Procédé selon la revendication 4, dans lequel le procédé en outre comprend les étapes consistant à: capturer une troisième image d'une plaque d'immatriculation d'un véhicule (14) déterminé d'avoir rempli l'une quelconque desdites conditions prédéterminées ; et mémoriser ladite troisième image dans une mémoire à long terme (37) et liée audit ensemble mémorisé d'images provenant desdites première et deuxième caméras.

6. Procédé selon l'une quelconque des revendications 4 à 5, dans lequel le procédé en outre comprend les étapes consistant à: capturer une quatrième image d'un conducteur d'un véhicule (14) déterminé d'avoir rempli l'une quelconque desdites conditions prédéterminées, ladite capture d'une image d'une conducteur étant réalisée lorsque ledit véhicule (14) passe par un point de capture (P) prédéterminée ; et mémoriser ladite quatrième image dans une mémoire à long terme (37) et liée audit ensemble mémorisé d'images provenant desdites première et deuxième caméras.

7. Procédé selon l'une quelconque des revendications 3 à 6, dans lequel le procédé comprend en outre la transmission de données enregistrées ou mémorisées en rapport avec ladite satisfaction desdites conditions prédéterminées.

8. Procédé selon l'une quelconque des revendications précédentes, dans lequel le procédé comprend en outre l'étape consistant à utiliser des images en hauteur multiples capturées à des moments différents pour déterminer une variation d'une valeur avec le temps d'au moins une variable d'une pluralité de variables étant indicative de l'emplacement dudit premier véhicule par rapport à l'emplacement dudit deuxième véhicule sur ladite section de route prédéterminée.

9. Système (34) pour la surveillance du comportement du trafic, dans lequel ledit système (34) comprend :
• un dispositif de caméra stéréoscopique (30),
• une unité de traitement (35) adaptée pour traiter des images de ladite caméra stéréoscopique (30),
• une mémoire à court terme (36), et
• une mémoire à long terme (37),
dans lequel ledit dispositif de caméra stéréoscopique (30) surveille une section de route prédéterminée, dans lequel des images capturées par ladite caméra stéréoscopique (30) sont mémorisées en continu dans ladite mémoire à court terme (36), lesdites première et deuxième images étant traitées pour produire une image en hauteur (20) de ladite section de route prédéterminée (15), **caractérisé en ce que** le système exécute un procédé selon l'une quelconque des revendications 1 à 8.

10. Système (34) selon la revendication 9, dans lequel ledit système est en outre muni d'une troisième caméra (31) adaptée pour capturer une image d'une plaque d'immatriculation d'un véhicule passant par un point de capture (P).

11. Système (34) selon l'une quelconque des revendications 9 à 10, dans lequel ledit système (34) est en outre muni d'une quatrième caméra (32) adaptée pour capturer une image d'un conducteur d'un véhicule passant par un point de capture (P).

12. Système (34) selon la revendication 10, dans lequel une capture de ladite image de plaque d'immatriculation ou de ladite image d'un conducteur est déclenchée par une condition prédéterminée étant déterminée d'être remplie et ladite image de plaque d'immatriculation ou ladite image d'un conducteur est liée à et mémorisée avec ledit enregistrement.
